Europäisches Patentamt

European Patent Office

Office européen des brevets

(11) Publication number: **0 538 980 A1**

# EUROPEAN PATENT APPLICATION

(21) Application number: **92304800.3**

(22) Date of filing: **27.05.92**

(51) Int. Cl.5: **H04N 9/81**

(30) Priority: **20.09.91 JP 241959/91**

(43) Date of publication of application:
**28.04.93 Bulletin 93/17**

(84) Designated Contracting States:
**DE FR GB NL**

(71) Applicant: **PIONEER ELECTRONIC CORPORATION**
**No.41, Meguro 1-chome**
**Meguro-ku Tokyo(JP)**

(72) Inventor: **Akiyama, Toru**
**2610, Hanazono 4-chome**
**Tokorozawa-City, Saitama(JP)**

(74) Representative: **Luckhurst, Anthony Henry William et al**
**MARKS & CLERK 57-60 Lincoln's Inn Fields**
**London WC2A 3LS (GB)**

(54) **Component video signal transmitting apparatus.**

(57) A component video signal transmitting apparatus which can suppress an influence by noises which are mixed with an FM signal when FM signals carrying thereon component video signals. After the polarities of the color difference signals in the component video signals were previously inverted (10,11), the polarity inverted color difference signals are frequency modulated (1) and transmitted. The polarities of the polarity inverted color difference signals in the demodulation signals are inverted (20,21) after they are transmitted.

FIG.4

The present invention relates to a transmitting apparatus for transmitting (including recording and reproduction) a color video signal in the form of the so-called component signals i.e. a luminance signal Y and two color difference signals $P_b$ and $P_r$.

In a "high vision" system, a color video signal is divided into a luminance signal and color difference signals by the following equations (1) and transmitted as component video signals.

$$Y = 0.701G + 0.67B + 0.212R$$
$$P_b = -0.384G + 0.500B + 0.116R$$
$$P_r = -0.445G - 0.055B + 0.500R \qquad (1)$$

An FM carrier is frequency modulated by the above Y signal and $P_b$ and $P_r$ signals and the resultant frequency modulated wave (FM wave) is transmitted. In such a transmitting process, various noises are mixed with FM wave and noises appear in a video signal demodulated from the FM wave after completion of the transmission, which is undesirable.

For instance, a case where the above FM signals are recorded onto an optical disk and reproduced will now be considered.

In such recordal and reproduction, noises appearing in a read signal which is derived from an optical disk are the so-called random noises and there are the following kinds of noises.

(a) Noises appearing in a head amplifier to amplify an RF signal

(b) Noises inherently carried by a disk which is called as disk noises.

(c) Optical noises appearing within a laser beam used as a reading light

(d) Crosstalks occurring at the reading operation by a disc player

There is such a phenomenon that the level of the high frequency component of the FM signal as a read signal which is derived from the optical disk decreases as compared with the low frequency component. Such a phenomenon is the so-called MTF (Motion Transfer Function) characteristics.

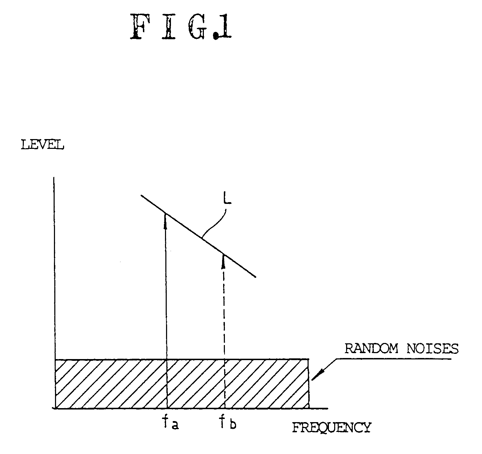

In Fig. 1, a solid line L indicates a frequency distribution of the FM signal read out from the optical disk. A hatched portion shows a level of the random noises. In such a state, since the random noises are uniformly distributed in a range from the low frequency band to the high frequency band, a carrier level of the high frequency component such as a frequency $f_b$ in the FM signal is lower than that of the low frequency component such as a frequency $f_a$ because of the MTF characteristics, so that it will be understood that a C/N ratio is bad in a higher frequency range. After completion of the frequency demodulation as well, consequently, a C/N ratio of the $f_b$ component deteriorates obviously as compared with the case of the $f_a$ compo-

nent.

In the case of frequency modulating the video signal, a modulating process is executed so that a frequency of the FM signal to the white level is higher than that to the black level. That is, the larger the magnitude of the luminance is, the higher the frequency is. In the demodulation signal, accordingly, the level of noises included in the white signal is higher than the level of noises included in the black signal component.

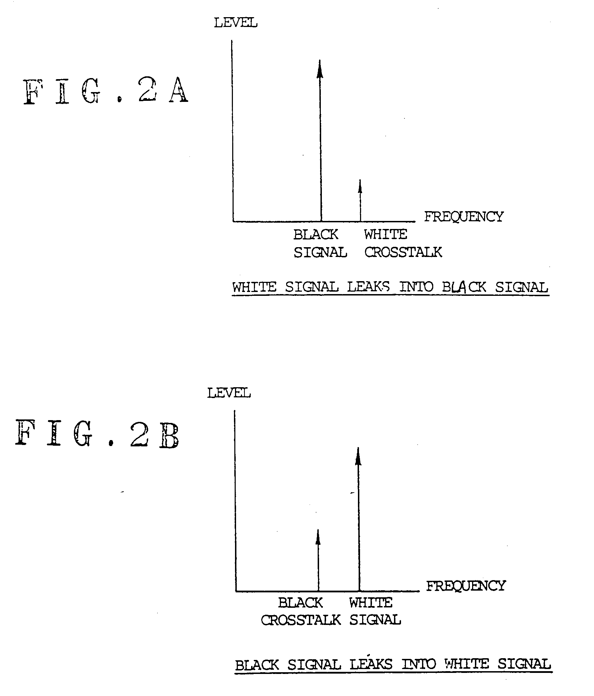

The above phenomenon mainly occurs with respect to the random noises due to the causes (a) to (c) mentioned above. The noises due to the crosstalks will now be described with reference to Figs. 2A and 2B.

Fig. 2A shows a case where an FM component corresponding to a white signal is mixed into an FM component corresponding to the black signal. Fig. 2B shows a case opposite to Fig. 2A. As will be obviously understood from Figs. 2A and 2B, the level of FM carrier indicative of the white signal is lower than the level of carrier indicative of the black signal. Further, the level of crosstalks of the white signal is also lower than the level of crosstalks of the black signal. The C/N ratio in the case where the black signal leaks in the white signal is, therefore, lower than that in the case where the white signal leaks in the black signal.

The above points will now be summarized below. Even when the cause of the noises is based on any one of the causes (a) to (d), the level of noises included in the black signal is lower than the level of noises included in the white signal. In other words, "a noise amount in a region of a low carrier frequency of the FM signal is smaller than a noise amount in a region of a high carrier frequency of the EM signal".

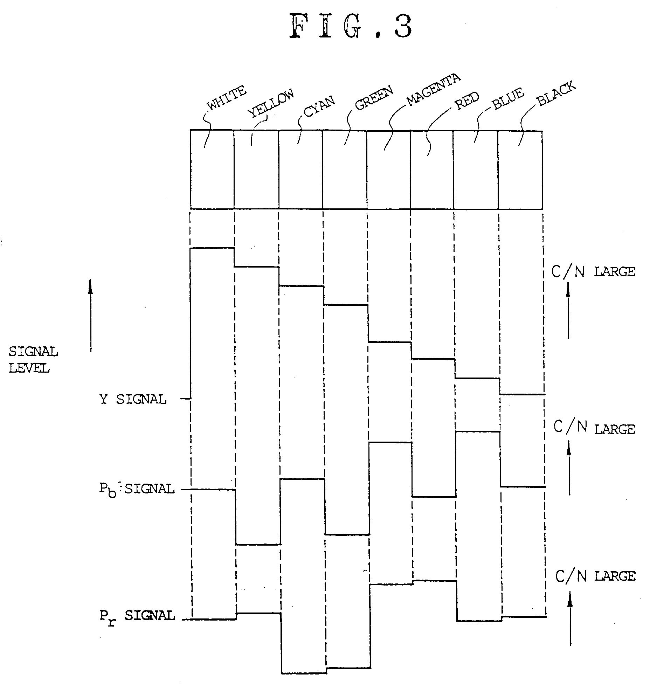

Fig. 3 shows a distribution state of color bars with respect to the Y, $P_b$, and $P_r$ signals. When the direction in which the luminance of each of the component signals is large coincides with the direction in which the frequency of the FM carrier is high, the direction in which the C/N ratio is large is shown by an arrow of ordinate on the right side of the graph of Fig. 3.

The noises in a color image are seen in such states which are:

(i) On a display screen, even the noises of the same level are conspicuous in a portion of a low luminance rather than the noises in a portion of a high luminance.

(ii) The color noises are conspicuous when the luminance is slightly dark and the absolute values of the color difference signals are large.

When observing the color bars in consideration of a state in which the color image is seen on the screen due to the noise signal, the C/N ratio decreases with a reduction of the brightness with regard to the Y signal and no problem occurs. When observing the color image with respect to the $P_b$ signal, the absolute value levels of the portions of magenta and blue are high and the C/N ratios are deteriorated, while the Y level decreases, so that the noises are conspicuous in those portions. When observing the color image with regard to the $P_r$ signal, the absolute value levels in the magenta and red portions are high and the noises in those portions are conspicuous by the same reason as that for the $P_b$ signal.

It is, therefore, an object of the present invention to provide a component video signal transmitting apparatus which can avoid as possible influence by noises which are mixed with the FM signal when transmitting the FM signal carrying thereon component video signals.

According to the present invention, there is provided a component video signal transmitting apparatus for transmitting a luminance signal and color difference signals corresponding to an original color video signal, comprising: polarity inverting means for inverting the polarities of the color difference signals so as to produce the polarity inverted color difference signals; transmitting means for transmitting FM signals which are obtained by frequency modulating the polarity inverted color difference signals and the luminance signal; demodulating means for demodulating the FM signals transmitted by the transmitting means so as to reproduce the polarity inverted color difference signals and the luminance signal; and polarity inverting means for inverting the polarities of the polarity inverted color difference signals.

In the component signal transmitting apparatus according to the present invention, since the polarities of the color difference signals are inverted, the component video signals are transmitted in a state in which the luminance level is suppressed in the portions where the levels of the color difference signals are large.

Fig. 1 is a graph showing frequency characteristics of FM signals which have passed through a transmitting system having high frequency attenuating characteristics and also showing a distribution state of random noises;
Figs. 2A and 2B are graphs showing levels of crosstalk components to an information signal in the case where crosstalks occur among the component video signals;
Fig. 3 is a color bar diagram showing level distributions to the hues of the component video signals after transmission and C/N ratios in the prior art;
Fig. 4 is a block diagram showing a transmitting apparatus for transmitting component color video signals according to the present invention;

Fig. 5 is a color bar diagram showing level distributions to the hues of component video signals which are transmitted by the component video signal transmitting apparatus and C/N ratios according to the invention; and
Figs. 6 and 7 are graphs respectively showing level changes of the color difference components to the luminance component level in a video signal.

An embodiment of the present invention will be described hereinbelow.

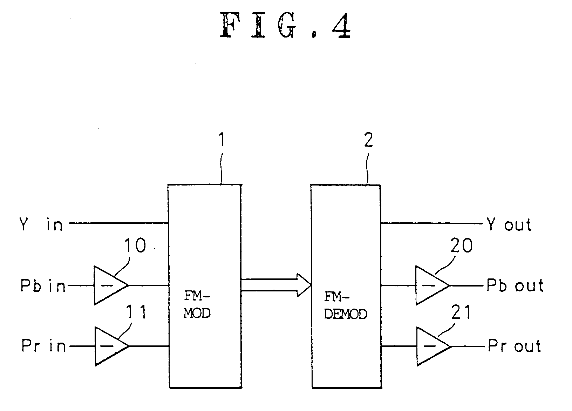

Fig. 4 shows a component video signal transmitting apparatus according to the invention. In the component video signal transmitting apparatus, before three component signals of the luminance signal Y and color difference signals $P_b$ and $P_r$ are modulated by a frequency modulator 1, the polarities of the color difference signals $P_b$ and $P_r$ are previously inverted by inverters 10 and 11. The three FM signals obtained in such a manner as mentioned above are respectively transmitted. The above transmission is not limited to the case where the three EM signals are respectively recorded onto and reproduced from three tracks but also includes a transmitting method whereby those FM signals are converted into TCI (Time Compressed Integration) signals and transmitted in a wireless manner, a transmitting method by the MUSE system, and the like. A recording medium such as optical disk, magnetic tape, or the like is considered as a recording medium in case an FM signal carrying the component video signals is recorded and reproduced.

The FM signals transmitted as mentioned above are demodulated by a frequency demodulator 2 so as to produce the luminance signal Y and polarity inverted color difference signals. The polarity inverted color difference signals $P_b$ and $P_r$ are inverted by inverters 20 and 21 so as to produce the original color difference signals $P_b$ and $P_r$.

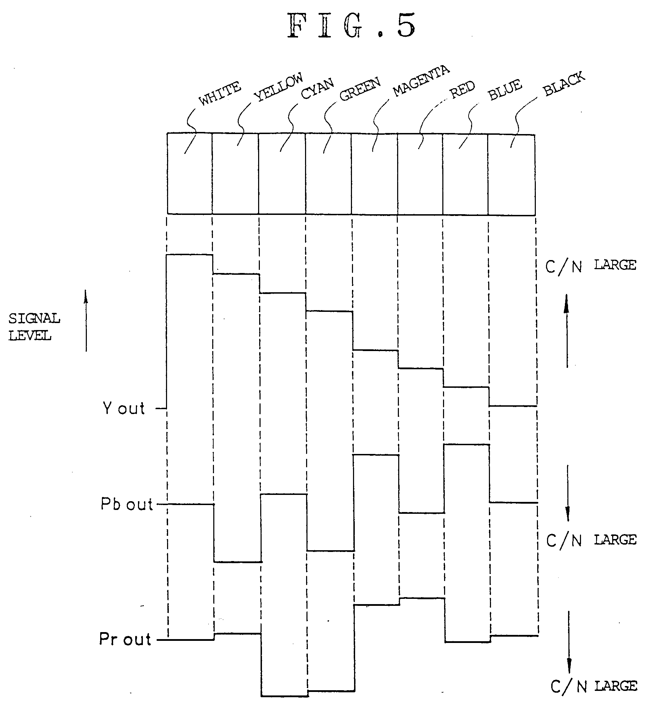

Fig. 5 is a diagram showing color bars similar to those in Fig. 3 and shows level distributions of the luminance signal Y and color difference signals $P_b$ and $P_r$ transmitted by the transmitting apparatus of Fig. 4 in correspondence to the hues. An axis of ordinate on the right side in Fig. 5 shows a state in which the direction in which the C/N ratio is large for the demodulated luminance signal Y and the directions in which the C/N ratios are large for the demodulated color difference signals $P_b$ and $P_r$ are opposite.

The following equations (2) are obtained by modifying the above equations (1).

$$G = Y - 0.227P_b - 0.477P_r$$
$$B = Y + 1.826P_b$$
$$R = Y + 1.576P_r \qquad (2)$$

where, it is assumed that the respective values suffice the following conditions: $0 < R < 1$, $0 < G < 1$, $0 < B < 1$, $0 < Y < 1$, $-0.5 < P_b < 0.5$, and $-0.5 < P_r < 0.5$.

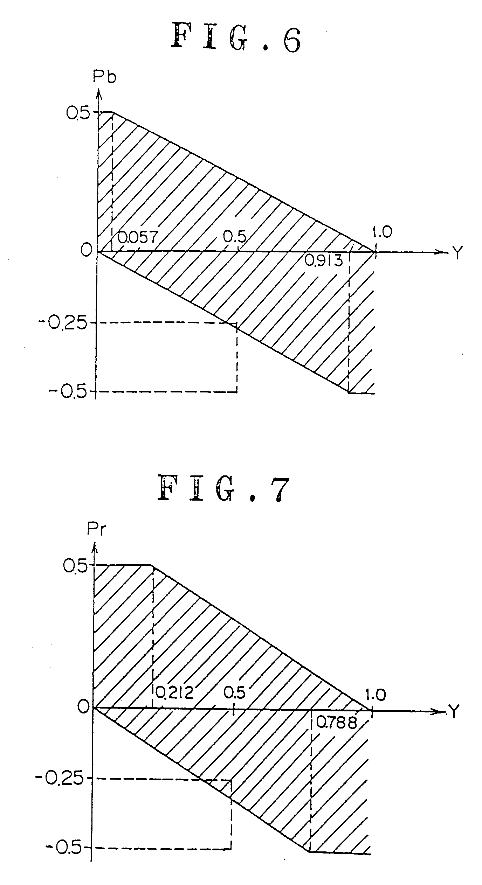

From the above equations (2), $P_b = (B - Y)/1.826$ and $P_r = (R - Y)/1.576$. Ranges of possible values of Y and $P_b$ and $P_r$ which satisfy $0 < B < 1$ and $0 < R < 1$ are shown in hatched portions in Figs. 6 and 7. It will be also understood that in the region of $Y < 0.5$, the above hatched portions hardly cross the ranges of $-0.25 < P_b < 0.5$ and $-0.25 < P_r < 0.5$.

From the above description, it will be understood that the value of $P_b$ or $P_r$ never has a negative large value in a low luminance range, in other words, the dark color of a complementary color system of blue or red can be said to be a color which is not transmitted. Since, therefore, the values of the color difference signals do not have large negative values in the low luminance range, an adverse influence by the level inversion of the color difference signals does not occur.

As will be apparant from the above description, according to the component video signal transmitting apparatus of the invention, after the polarities of the color difference signals in the component video signals were previously inverted, they are frequency modulated and transmitted. It is, therefore, possible to suppress the influence by the noises mixed with the color difference signals of the high level of the hue in which the luminance level is low irrespective of the high frequency attenuating characteristics of the transmission path, so that it is preferable.

## Claims

1.  A component video signal transmitting apparatus for transmitting a luminance signal and color difference signals corresponding to an original color video signal, comprising:

    polarity inverting means (10,11) for inverting polarities of the color difference signals so as to produce polarity inverted color difference signals;

    transmitting means (1) for frequency modulating said polarity inverted color difference signals and the luminance signal and transmitting resultant FM signals;

    demodulating means (2) for demodulating the FM signals transmitted by the transmitting means so as to produce the polarity inverted color difference signals and the luminance signal; and

    polarity inverting means (20,21) for inverting polarities of the polarity inverted color difference signals.

# F I G.1

FIG.2A

LEVEL

FREQUENCY

BLACK     WHITE
SIGNAL    CROSSTALK

WHITE SIGNAL LEAKS INTO BLACK SIGNAL

FIG.2B

LEVEL

FREQUENCY

BLACK      WHITE
CROSSTALK  SIGNAL

BLACK SIGNAL LEAKS INTO WHITE SIGNAL

# FIG.3

SIGNAL LEVEL

WHITE   YELLOW   CYAN   GREEN   MAGENTA   RED   BLUE   BLACK

C/N LARGE

Y SIGNAL

C/N LARGE

$P_b$ SIGNAL

C/N LARGE

$P_r$ SIGNAL

# FIG.4

# FIG. 5

WHITE  YELLOW  CYAN  GREEN  MAGENTA  RED  BLUE  BLACK

SIGNAL LEVEL

Y out

Pb out

Pr out

C/N LARGE

C/N LARGE

C/N LARGE

# F I G . 6

# F I G . 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | NHK LABORATORIES NOTE no. 262, March 1981, TOKYO JP pages 3 - 12 K. YOKOYAMA ET AL. 'An Experimental Compact VTR for Broadcast Use.' * page 6, line 9 - line 36; figure 6 * | 1 | H04N9/81 |
| A | PATENT ABSTRACTS OF JAPAN vol. 7, no. 194 (E-195)(1339) 24 August 1983 & JP-A-58 96 482 ( MATSUSHITA DENKI KOGYO ) 8 June 1983 * abstract * | 1 | |

TECHNICAL FIELDS SEARCHED (Int. Cl.5)

H04N

The present search report has been drawn up for all claims

| Place of search | Date of completion of the search | Examiner |
|---|---|---|
| THE HAGUE | 15 JANUARY 1993 | VERLEYE J. |

EPO FORM 1503 03.82 (P0401)